# EUROPEAN PATENT SPECIFICATION

(11) **EP 3 316 261 B1**
(45) Date of publication and mention of the grant of the patent: **27.12.2023**
(21) Application number: 16814795.7
(22) Date of filing: 10.06.2016
(51) Int. Cl.: G05B 9/03, G21C 7/36, G21D 3/04

(54) **CONTROL SYSTEM FOR THE SAFETY OF NUCLEAR POWER PLANT**
STEUERUNGSSYSTEM ZUR SICHERHEIT EINES KERNKRAFTWERKS
SYSTÈME DE COMMANDE DE SÉCURITÉ D'UNE CENTRALE NUCLÉAIRE

(30) Priority: 25.06.2015 RU 2015125046
(43) Date of publication of application: 02.05.2018
(73) Proprietor: Federal State Unitary Enterprise "All - Russian Research Institute Of Automatics", Moscow 127055 (RU)
(72) Inventor: KISHKIN, Vladimir Lvovich, Moscow 115172 (RU); NARITS, Aleksandr Dmitrievich, Moscow 109451 (RU); MOISEEV, Mikhail Ivanovich, Moscow 129090 (RU); NOVIKOV, Alexey Ivanovich, Moscow 115280 (RU); KARPOV, Petr Sergeevich, Moscow 127543 (RU); TIMOKHIN, Dmitriy Sergeevich, Moscow 117513 (RU); GRITSENKO, Stanislav Yur'evich, Moscow 125239 (RU); MEYLAKHS, Artem L'vovich, Moscow 121351 (RU); NOVIKOV, Aleksandr Aleksandrovich, Moscow 125480 (RU)
(74) Representative: Friese Goeden Patentanwälte PartGmbB
(86) International application number: PCT/RU2016/000356
(87) International publication number: WO 2016/209114

(56) References cited:
- WO-A2-98/57238
- RU-C1- 2 150 756
- RU-C1- 2 431 174
- RU-C2- 2 356 111
- US-A- 5 745 539
- US-A- 6 049 578
- US-A1- 2011 209 021
- US-A1- 2011 313 580

## Description

The invention relates to automatics and computer engineering, and can be used in I&C systems of nuclear power plants (NPP) for constructing control safety systems (CSS) of NPP.

A digital plant protection system is known (U.S. Patent No. 6049578, IPC G21C 7/36, published on April 11, 2000, analog), which consists of four identical processing & control channels that provide detection of a trip condition at a facility by means of comparison of measured parameter values with predetermined setpoints and execution of user-specified remedial actions in case the parameters are out-of-specification. Safety channels, physically separated from one another, are cross-connected with each other by optical fiber communication paths. Each channel includes analog and digital sensors associated with this channel; analog-to-digital converters that provide at the output digital representation of the measured analog signals; a bistable processor; a coincidence logic processor, and a logic processor initiating actuation mechanisms (AM) and automatic safety features of a reactor. The bistable processor accepts digital values of measured signals of its own channel, convert them into the process-dependent parameters, checks measured parameters for deviation beyond the predetermined limits, generates for each parameter a binary sign of deviation, transmits these signs via optical fiber lines to other processing & control channels. The coincidence logic processor receives from the bistable processor of its channel the binary signs of parameters deviation for the signals of this channel, and receives via optical fiber lines from the other channels the binary signs of deviation for the respective parameters. For every parameter the coincidence logic processor checks receipt of signs of beyond-limit deviation of 2 out of 4 channels. If the coincidence processor detects deviation from the permissible values of the parameters for 2 out of 4 channels, then initiation logic processor generates needed signals for reactor trip and for actuation of digital safety features.

The protection system has the following disadvantages.

There is no possibility of access from the side of the normal operation system to the safety system sensors and actuation mechanisms, which requires additional inputs for monitoring of state and for control of general NPP equipment by the normal operation and safety systems. The protection system equipment does not have means for self-checking with external monitoring of its results, which complicates localization of failures and increases recovery time.

US 2011/313580 A1 discloses a method of monitoring and controlling plant operations, which receive input signals from sensors monitoring parameters of plant operation to generate output signals to actuators. This method comprises: reducing the input signals to a selected group of input functions; reducing the output signals to a selected group of output functions; processing the input signals using FPGA to generate the output signals. The invention also relates to the platform and system embodying the method.

US 2011/209021 A1 discloses methods of monitoring logic circuits for failures. These methods are directed toward establishing parallel logic cores where failures are detected by comparing the parallel paths for equivalence at key locations by a redundancy checker. Any mismatch will result in a predetermined failsafe operational mode. In addition, important techniques are applied to periodically exercise individual parallel paths to ensure that logic cores are verified in a way that does not disturb any process being monitored or controlled. The invention also relates to a high integrity logic circuits embodying the methods.

A digital control safety system (DCSS) of nuclear power plant together with a method of safety parameters provision is known (RU patent No. 2356111, IPC G21C7/36, published in 2009, prototype), which consists of three separate identical safety channels executing evaluation of a facility state by means of the analysis of the parameter values received from the process sensors, and generating control protective actions in case of emergency situation. Physically separated safety channels are cross-connected with each other by optical fiber communication paths. Each channel includes an input device, comparator, control action generating device, lockout selection device, and actuation mechanisms control device. The input device executes input of analog signals of the process and their conversion into digital form. The comparator compares read out parameter values with pre-determined digital values and starts the device generating control signals, based on which the lockout selection device initiates generation of actuation mechanism control signals. Each digital processing device of the safety channel is cross-connected via interchannel optical lines with each respective device in other channels, forming 4 levels of interchannel communication paths and majority redundancy according to `2 out of 3' principle. Majority processing of control commands from the 3 safety channels is also implemented by hardware at the inputs of devices controlling actuation mechanisms AM.

The prototype DCSS contains wire lines of communication of safety channel AM control devices with the main control room (MCR) and emergency control room (ECR), via which remote control of actuation mechanisms from MCR and ECR as well as transmission of data on the state of these mechanisms to MCR and ECR is implemented.

The prototype has the following disadvantages.

There is no hardware & software means of access to sensors and actuation mechanisms from the side of the normal operation system. Because of this additional inputs are required for monitoring of state and for control of general NPP equipment by the normal operation and safety systems. The safety system equipment does not have means for self-testing with external monitoring of self-testing results, which complicates localization of failures and increases recovery time. This invention eliminates mentioned disadvantages.

Technical result of the invention includes reduction of inputs for monitoring and automatic control of general NPP equipment from the side of the safety and normal operation systems owing to normal operation features integrated in safety channels, enhancement of safety system reliability and protection against common cause failures by means of constructing safety features and normal operation features based on different software & hardware platforms, extension of CSS diagnostic capabilities owing to implementation by a normal operation automation controller of additional functions of evaluating safety channel operation using NPP state-of-health data received by the controller from the process and from the automation controllers of safety channels, extension of CSS diagnostic capabilities owing to equipment state-of-health control features integrated into CSS generating special fault signals, and their input, processing and transmission by the normal operation automation controller to the upper level of the normal operation system control.

Technical result is achieved by the fact that in the control safety system of a nuclear plant, which contains multiple identical safety channels, each channel includes process signal I/O stations IOS_{1 - n}, actuation mechanism priority control stations PCS₁₋ₘ connected with the main control room MCR and emergency control room ECR, safety features automation controller (SF AC), safety feature I/O bus SF IOB for data exchange between SF AC and IOS/PCS stations, and is cross-connected with other safety channels by means of duplex optical fiber communication paths; the IOS station contains modules of communication with the process MCP_{1 - k} and communication module - converter of communication interfaces CIC of SF IOB bus; the PCS station contains actuation mechanism priority control modules PCM_{1 - e} and communication modules: voting communication module VCM and voting module VM of SF IOB bus; the automation controller SF AC contains safety feature automation processor module SF APM and communication modules - branching modules BM-4_{1 - p} of SF IOB bus; automation controllers SF AC of all safety channels are connected to the normal operation system via redundant bus EN; each safety channel additionally contains normal operation automation controllers AC_{1 - s} that are connected with IOS_{1 - n} stations and PCS_{1 - m} stations via redundant buses ENL of normal operation built based on switched Ethernet interface, radial structure of net switch connection and specific data-level communications protocol, and with the normal operation system via redundant bus EN of normal operation built based on switched Ethernet interface, ring structure of net switch connection and specific data-level communications protocol; normal operation automation processors AC, means of AC communication with MCP and PCM modules integrated into IOS and PCS stations, and normal operation software & hardware built in MCP and PCM modules are built based on different hardware & software platforms; IOS and PCS stations, SF AC controller, and power supply and communications equipment of the safety system contain built-in self-testing and self-monitoring means that generate at special outputs binary signals of state of the respective equipment 'operative/inoperative' coming to NO AC, where signals are processed and transmitted to the upper level of the normal operation system control via EN bus. In IOS station, communication module CIC of SF IOB bus via separate SF IOB communication lines is connected with automation controller SF AC of safety channel and with each MCP_{1 - k} module of this station. Each IOS station contains two redundant interface modules IMN of normal operation connected to normal operation automation controller NO AC via redundant bus ENL; an individual normal operation processor is built in each MCP_{1 - k} module, which is connected with each of the 2 IMN modules via separate line of a serial duplex 'point-to-point'-type interface of the normal operation bus NO IOB. In each safety channel, PCS stations are combined into groups of N stations, a number of PCS stations is determined by a number of safety channels; the first station of the group PCS₁ via SF IOB communication line is connected with SF AC controller of its safety channel, other stations PCS_{2-N} of the group are connected with SF AC controllers of the other safety channels 2-N; communication module VCM of each station PCS is connected with communication module of voting according to '2 out of N' majority algorithm VM of its PCS station and communication modules VM of other PCS stations of the group; communication module VM of each PCS station is connected via SF IOB communication lines with priority control modules PCM_{1 - e} of this station. Each PCS station contains two redundant interface modules IMN of normal operation connected to normal operation automation controller NO AC via redundant bus ENL; an individual normal operation processor is built in each PCM_{1 - e} module, which is connected with each of the 2 IMN modules via separate line of serial duplex 'point-to-point'-type interface of the normal operation bus NO IOB.

Additional normal operation hardware and software built in the safety channels, which provide access to sensors and actuation mechanisms of the CSS from the side of the normal operation system, reduce expenditure for implementation of NPP general equipment monitoring and control.

Individual normal operation processor built in MCP modules executes, following the commands from normal operation automation controller AC, all functions of input/output module of the normal operation system if there is no emergency situation at NPP, and functions of acquisition of process data about NPP state and of this data transmission to normal operation controller AC via NO IOB and ENL buses.

Individual normal operation processor integrated in PCM modules executes, following the commands from the normal operation automation controller AC and together with it, functions of automatic control of actuation mechanisms in the normal operation system if there is no emergency situation at the NPP.

Connection of SF AC and AC controllers to the normal operation bus EN ensures transmission to the upper control level of the normal operation system of diagnostic information about execution of safety and normal operation functions of the CSS and about the state-of-health of the equipment within the CSS, which extends diagnostic capabilities for timely detection of fault conditions and restoration of the CSS.

Normal operation software & hardware additionally included into the CSS configuration are built based on processors, programmable logic circuits PLC, basic and system software, and development tools meeting diversity requirements for software & hardware safety features. This ensures exclusion of simultaneous common cause failure of safety and normal operation software & hardware features of the CSS. In case of common cause failure of safety channels, including an accident, the normal operation system detects this event and stops NPP.

Self-testing and self-monitoring features of the CSS equipment, and, being external relative to monitored CSS equipment, means of CSS equipment monitoring implemented in AC controller ensure CSS equipment diagnostics with registration at the upper control level, even if the controlled devices cannot transmit appropriate message of failure to the upper level due to their failure or due to the fact that they have no such function. This extends diagnosing capabilities, reduces recovery time, and enhances availability of the CSS.

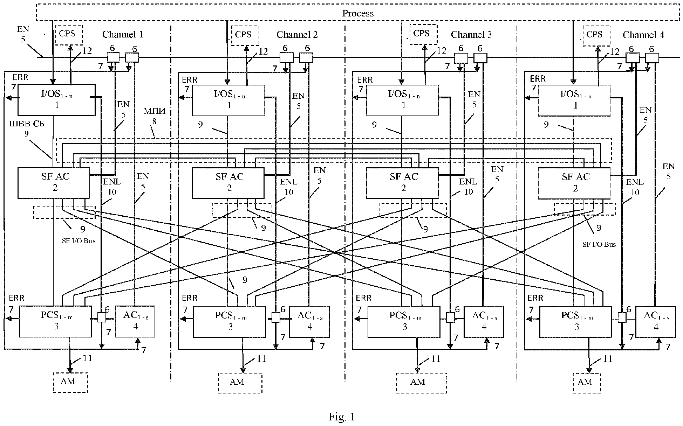

The matter of the invention is elucidated in Figures 1 - 8.

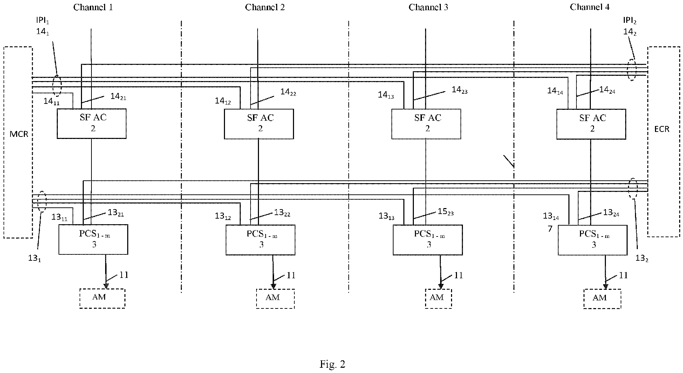

Figures 1 and 2 show block diagram of the four-channel control safety system CSS structure, where: *1* are I/O stations IOS_{1 - n}, n is a number of IOS stations in one CSS channel; *2* is safety system automation controller SF AC; *3* are priority control stations PCS_{1 - m}, m is a number of PCS stations in one CSS channel; *4* are normal operation automation controllers AC_{1 - s}, s is a number of controllers in one CSS channel; *5* is redundant bus EN of normal operation; *6* are net switches of EN and ENL buses; *7* are binary signals of CSS channels equipment state (operative/inoperative); *8* is interprocessor interface IPI of communication of each safety channel SF AC controllers with SF AC of other safety channels; 9 is a safety I/O bus SF IOB; *10* is redundant bus ENL of normal operation; *11* are control signals for actuation mechanisms AM; *12* are control signals for control and protection system CPS; *13*₁ are wire lines of communication of PCS stations of each CSS channel with the MCR; *13*₂ are wire lines of communication of PCS stations of each CSS channel with the ECR; *14*₁ are IPI₁ buses of communication of each safety channel SF AC controllers with the MCR; *14*₂ are IPI₂ buses of communication of each safety channel SF AC controllers with the ECR.

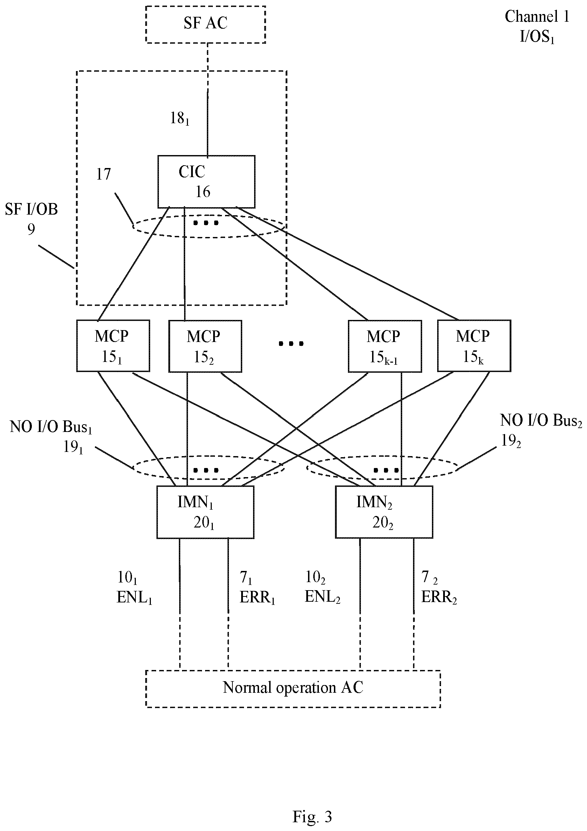

Figure 3 shows block diagram of I/O station IOS (using the example of IOS₁ station of channel 1), where: *9* is a segment of I/O bus SF IOB; *10* (*10*₁, *10*₂) is redundant bus ENL (ENL₁, ENL₂); *15*₁ - *15*ₖ are modules of communication with the process MCP, k is a number of MCP modules in IOS station; *16* is communication module CIC; 17 are lines of CIC module *16* communication with MCP modules *15*₁ - *15*ₖ via SF IOB bus 9; *18*₁ is communication line of CIC module *16* of IOS₁ station with automation controller SF AC via SF IOB bus 9; *19* (*19*₁, *19*₂) is redundant I/O bus of normal operation NO IOB (NO IOB₁, NO IOB₂); *20* (*20*₁, *20*₂) are redundant interface modules IMN (IMN₁, IMN₂) of NO IOB bus interfacing with ENL bus.

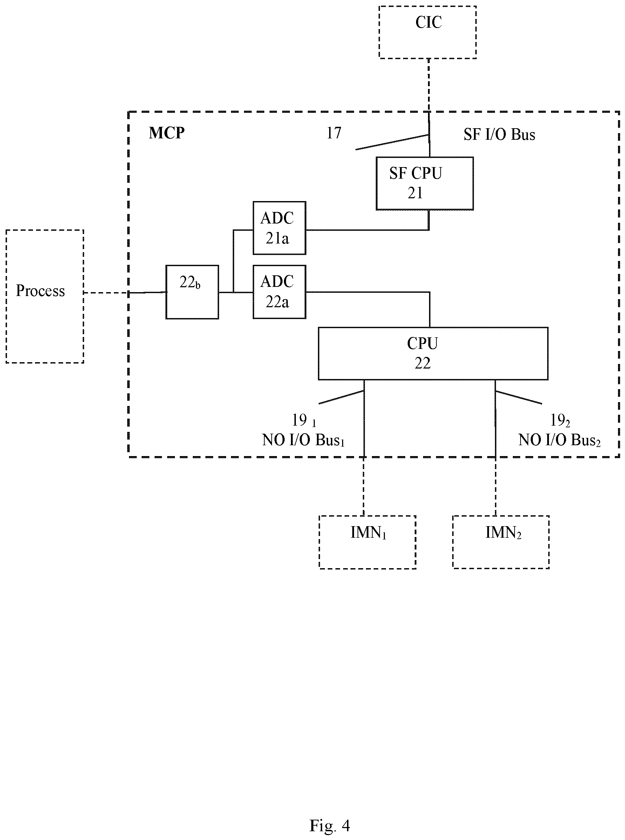

Figure 4 shows block diagram of MCP module of analog signal input, where *17* is a line of SF CPU processor *21* communication via SF IOB bus with CIC module; *19* (*19*₁, *19*₂) are lines of normal operation processor CPU *22* communication with redundant modules IMN₁ and IMN₂ via redundant bus NO IOB (NO IOB₁, NO IOB₂); *21* is a safety feature processor SF CPU; 21ₐ is a safety feature analog-to digital converter ADC, *22* is a normal operation processor NO CPU; *22*ₐ is a normal operation analog-to digital converter ADC; *22*_{b} are input circuits of MCP module.

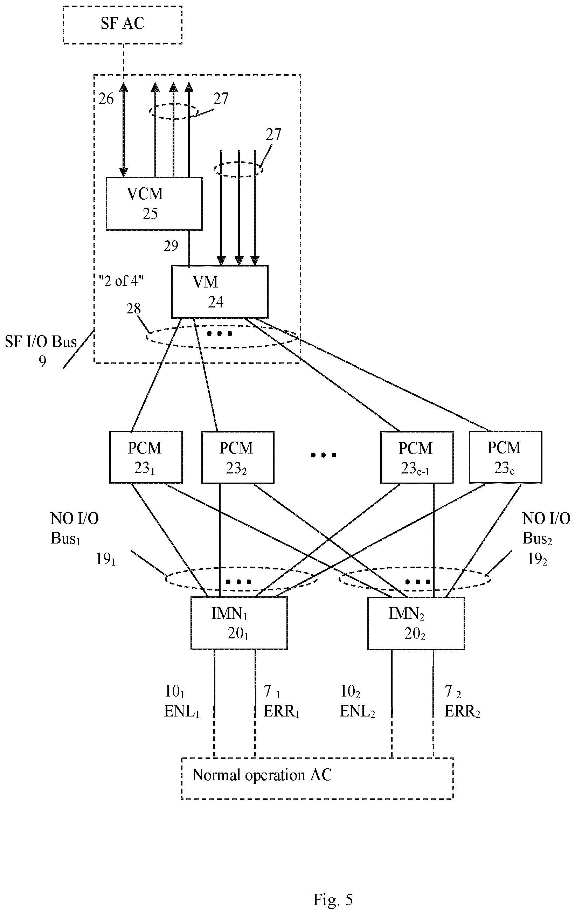

Figure 5 shows the structure of a priority control station PCS using the example of PCS station being part of a group of 4 stations of a 4-channel CSS, with which automation controller SF AC of each channel implements data exchange via one communication line of SF IOB bus, where: 7 (7₁, 7₂) are generalized discrete fault signals ERR of safety and normal operation equipment of IOS station, *9* is a segment of I/O bus SF IOB; *10* (*10*₁, *10*₂) is redundant bus ENL (ENL₁, ENL₂); *19* (*19*₁, *19*₂) is redundant I/O bus of normal operation NO IOB (NO IOB₁, NO IOB₂); *20* (*20*₁, *20*₂) are redundant interface modules IMN (IMN₁, IMN₂) of NO IOB bus interfacing with ENL bus; *23*₁ - *23*ₑ are priority control modules PCM, *e* is a number of PCM modules in PCS station; *24* is communication module of voting according to '2 out of 4' VM principle; *25* is communication module VCM; *26* is a line of communication of VCM 25 with SF AC controller of its own or other safety channel via SF IOB bus *9*; *27* are interstation lines of communication of VCM (VM) modules of PCS station of the group of PCS_{1 - 4} stations with VM (VCM) modules of the other 3 stations of the group via SF IOB bus *9*; *28* are lines of communication of VM module *24* via SF IOB bus 9 with PCM modules *23*₁ - *23*ₑ; *29* is a line of communication of VCM module 25 with VM module *24* of its PCS station.

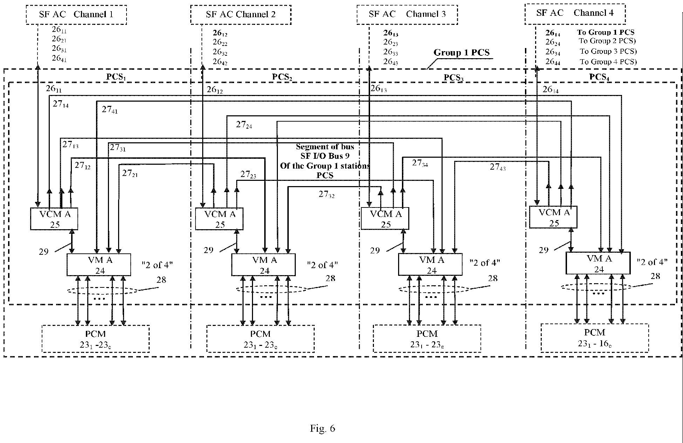

Figure 6 shows the structure of links via SF IOB bus of a group 1 of 4 stations PCS_{1 - 4} of safety channel 1-4 of a 4-channel CSS with SF AC controllers of 4 safety channels, where: 9 is a segment of SF IOB bus; *24* is communication module of voting VM; *25* is communication module VCM; *26* (*26*₁₁, *26*₂₂, *26*₃₃, *26*₄₄) are lines of communication via bus SF IOB of VCM modules of PCS stations of group 1 with controllers SF AC of, respectively, channels 1 - 4; *27* (*27*₁₂, *27*₁₃, *27*₁₄, *27*₂₁, *27*₂₃, *27*₂₄, *27*₃₁, *27*₃₂, *27*₃₄, *27*₄₁, *27*₄₂, *27*₄₃) are inter-station (inter-channel) lines of communication of VCM module of each PCS₁₋₄ station with VM modules of 3 other 3 stations via SF IOB bus; *28* are communication lines of VM module *24* via SF IOB bus *9* with PCM modules *23*₁ - *23*ₑ; *29* is a intra-station (channel) line of communication of module VCM 25 with VM module *24* of PCS station of its channel.

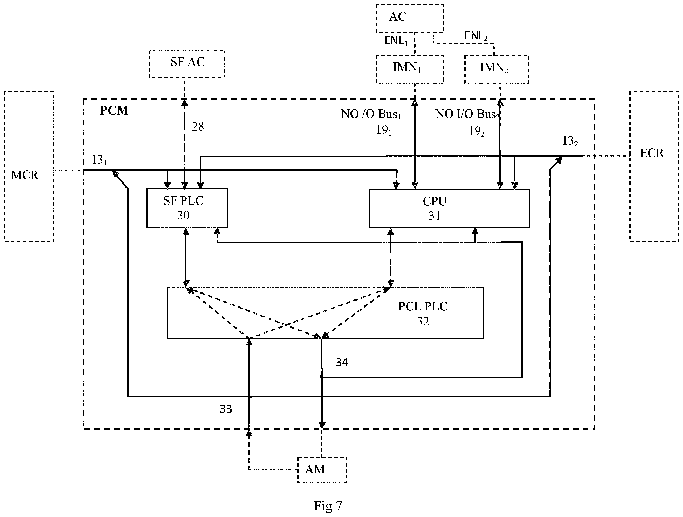

Figure 7 provides block diagram of priority control module PCM, where: *13*₁ are wire lines of AM remote control from the MCR; *13*₂ are wire lines of AM remote control from the ECR; *19*₁, *19*₂ are communication lines of redundant bus NO IOB₁, NO IOB2; *28* is communication line of SF IOB bus; *30* is programmable logic circuit SF PLC; *31* is normal operation processor CPU; *32* is programmable logic circuit of priority control logic PCL PLC; *33* is AM state inputs line; *34* is a feedback link for interrogation of a state of control command sent to AM.

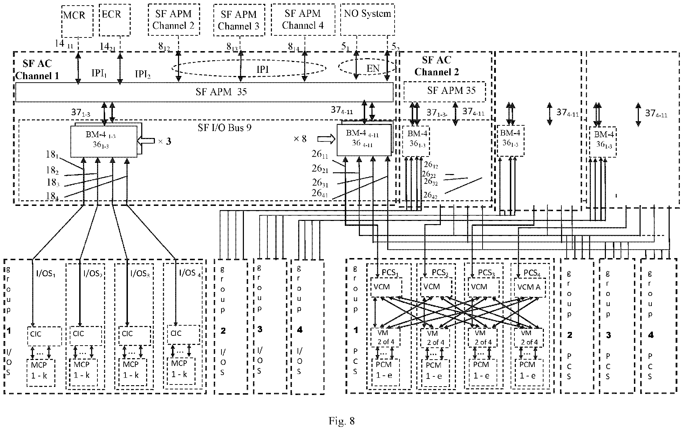

Figure 8 shows a block diagram of SF AC automation controller (using the example of channel 1 SF AC), where: *5*₁, *5₂* is redundant bus EN of normal operation; 8₁₂, *8*₁₃, *8*₁₄ are interprocessor interfaces IPI of channel 1 SF AC communication with SF AC of channels 2, 3, 4; *9* is a segment of SF IOB bus; *14*₁₁, *14*₂₁ are communication interfaces of automation processor SF APM *35* of channel 1 via buses IPI₁, IPI₂, respectively, with MCR and ECR; *18*₁, *18*₂, *18*₃, *18*₄ are communication links of communication module BM-4 36₁₋₃ of channels 1 - 4, respectively, with groups 1 - 4, 5 - 8, 9 - 12 of stations IOS₁, IOS₂, IOS₃, IOS₄ channels 1 - 4 via SF IOB bus (Figure 8 shows only IOS groups 1 - 4, connected to module BM-4₁ 36₁); *26*₁₁, *26*₁₂, *26*₁₃, *26*₁₄ are communication lines of module BM-4 36₄ , respectively, with stations PCS ₁₋₄ of group via SF IOB (to each module BM-4 ₅₋₁₁ according to the same scheme, respectively, modules of stations PCS ₁₋₄ are connected with 7 more groups of stations: 5 - 8, 9 -12, 13 - 16, 17 - 20, 21 - 24, 25 - 28, 29 - 32); 35 is automation processor module SF APM; *36*₁ - *36*ₚ are communication modules BM-4; *37*₁ - *37*ₚ are are communication lines of module SF APM *35* with communication modules BM-4 via bus SF IOB.

CSS software & hardware complex, schematically represented in Figures 1 and 2 using the example of 4-channel control safety system CSS, operates in the following way.

I/O stations IOS₁₋ₙ of each safety channel receive analog and binary signals of the process, convert them into digital form, and transmit via safety I/O bus SF IOB *9* to safety channel automation controller SF AC *2*. Following commands of SF AC controller *2*, IOS stations generate and send control signals for CPS as shown in Figure 1.

SF AC controller *2* converts received digital values of analog and binary signals into process parameters, transmits them via interprocessor interface IPI *8* to automation controllers SF AC *2* of other safety channels, receives process parameters from these safety channels, and executes software-based selection of parameters for further processing according to majority algorithm '2 out of 4' at the first level of interchannel communications and majority redundancy. Automation controller SF AC *2* compares process parameters, selected according to the majority algorithm, with the predetermined limits of nuclear power plant safety operation. Further processing of the received process parameters is executed at several stages of implementation of protection algorithms, including intermediate conversion of the results of processing, interchannel communications via IPI interfaces *8*, and majority processing at every stage.

If SF AC controller *2* detects an emergency situation as a result of analysis of input process parameters, it generates and sends via SF IOB bus *9* protection commands to the priority control stations PCS_{1 - m} *3* of its own safety channel and to PCS stations *3* of other safety channels at the second level of interchannel communications.

If the emergency situation requires reactor trip, then SF AC *2* sends via SF IOB bus to respective IOS stations control commands for CPS.

Automation controller SF AC *2* in the process of operation generates and sends to the upper level of the normal operation system via normal operation bus EN *5* diagnostic information about execution of protection functions and about the state of SF AC and IOS/PCS stations. Reception of information in SF AC *2* via EN bus from the normal operation system is blocked.

Priority control stations PCS_{1 - m} *3* receive actuation mechanism control commands from SF AC controller *2* of their own channel and from SF AC *2* of the other safety channels, and execute their hardware-based processing according to redundancy principle '2 out of 4' at the second level of interchannel communications and majority redundancy.

PCS_{1 - m} stations *3*, based on the commands selected according to majority principle, generate control signals for actuation mechanisms AM *11.*

PCS_{1 - m} stations *3* of the safety channel receive also control commands from other control centers: main control room MCR, emergency control room ECR, and normal operation system, and generate control signals for AM *11* according to priorities of the control centers.

According to Figure 2 the MCR and ECR are connected directly to PCS_{1 - m} stations *3* of each safety channel via wire lines, and to SF AC controllers *2* via communication lines of buses IPI₁ *14*₁, IPI₂ *14*₂ of Ethernet 'point-to-point'-type interface with specific data-level communications protocol.

Via wire communication lines *13*₁*, 13*₂*,* from MCR and ECR to PCS_{1 - m} *3* binary control signals are transmitted, and from PCS_{1 - m} *3* to MCR and ECR signals reflecting the state of priority control stations and AM *11* are transmitted to be displayed on safety panels.

Via communication lines IPI₁ *14*₁, IPI₂ *14*₂, from SF AC controller of 2 safety channels to MCR and ECR diagnostic information about execution of protection algorithms and extended diagnostic information about the state of actuation mechanisms and priority control modules is transmitted.

Access to CSS sensors and actuation mechanisms from the side of the normal operation system is implemented via redundant bus EN *5* through normal operation automation controllers AC_{1 - s} *4* (Figure 1) being part of the CSS, and through normal operation software & hardware of IOS and PCS stations.

Normal operation automation controllers AC_{1 - s} *4* of the CSS configuration are connected with IOS_{1 - n} *1* and PCS_{1 - m} stations *3*, and respectively, with CSS sensors and actuation mechanisms via redundant bus ENL *10*, similarly to the connection of AC controllers, being part of the normal operation system, with their stations, and execute normal operation system functions of processing data coming from CSS sensors if there is no emergency situation, and function of collecting data needed for evaluation of NPP state.

Controllers AC₁₋ₛ 4 exchange data with AC controllers being part of the normal operation system and with the upper level system in accordance with the purposes of the normal operation system, and transmit information about the performance of normal operation functions to the upper control level via redundant bus EN 5. Controllers AC_{1 - s} 4 also implement additional functions of collecting, analysis and transmission to the upper level of the state of binary fault signals 7 (Figure 1) generated by hardware means of CSS equipment, including safety features and normal operation means built in IOS, PCS stations, as well as CSS power supply and communications equipment. These signals are generated by self-monitoring software and hardware of the corresponding CSS equipment using the contacts of signal relays, are received by controllers AC _{1 - s} 4 via discrete signal input channels and are transmitted to the upper control level even if the controlled CSS device itself cannot perform this functionally or due to a malfunction.

SF AC controller *2* is connected with IOS_{1 - n} *1* and PCS_{1 - m} *3* stations via specific I/O bus SF IOB 9.

SF IOB bus *9* is implemented using duplex serial interfaces of 'point-to-point' type and has 'tree'-type structure, in the upper root node of which an automation processor module SF APM is connected to the bus, and in the bottom nodes - MCP and PCM modules are connected. In the intermediate nodes of the structure communication modules of automation controller, I/O stations and priority control stations are placed.

The bus has two groups of 'point-to-point'-type communication lines: lines of downstream data and commands from SF APM processor module to MCP input/output modules and priority control modules PCM, and upstream data lines from MCP and PCM modules to SF APM processor module. For downstream data the communication module implements branching of data, coming via one of the 'tree' lines from the upper bus node, to several communication lines to the low bus nodes; and for the upstream data it implements concentration of data, coming to the module via several communication lines of the 'tree' from low bus nodes, to one communication line to the upper bus nodes. Communication modules VM in the priority control stations PCS execute also majority processing according to `2 out of N' principle of downstream commands and data from all safety channels at the second level of inter-channel communications.

IOS station, which structure is shown in Figure 3 using the example of IOS₁ station of channel 1, contains: communication module CIC *16* of SF IOB bus *9*, modules of communication with the process MCP *15*₁ - *15*ₖ*.* CIC module is connected via separate communication lines of SF IOB *17* of 'point-to-point' type of serial duplex interface with each MCP module *15*₁ - *15*ₖ, and via communication line of SF IOB bus *18*₁ - with automation controller SF AC.

Communication module CIC *16* distributes commands and data coming via SF IOB line *23*₁ from SF AC controller *2*, to SF IOB lines *17* of communication with MCP modules, and concentrates data coming via lines *17* from MCP modules to SF IOB line *18*₁ of IOS station communication with SF AC. Via communication line *18*₁ an access to each MCP module of I/O station from the side of SF AC for data transmission and reception is implemented.

IOS station additionally contains independent software & hardware of normal operation that ensure access to sensors and actuation mechanisms from the side of the normal operation system: normal operation processors integrated into MCP modules that implement preprocessing of the process signals according to normal operation algorithms, and means of their communication with normal operation controllers AC of the CSS configuration.

Communication of MCP modules and, respectively, of integrated into them normal operation processors with the normal operation system is implemented using redundant interface modules IMN₁ *20*₁, IMN₂ *20*₂ and redundant I/O bus of normal operation NO IOB₁ *19*₁, NO IOB₂ *19*₂. NO IOB bus consists of 'point-to-point'-type lines of serial duplex interface connecting each redundant module IMN₁ *20*₁, IMN₂ *20*₂ with each MCP module *15*₁ - *15*ₖ.

Redundant modules IMN₁ *20*₁, IMN₂ *20*₂ implement functions of redundant bus ENL₁ *10*₁, ENL₂ *10*₂ interfacing with intra-station redundant I/O bus NO IOB₁ *19*₁, NO IOB₂ *19*₂ through which commands for inputting the values of the input signals or for reproducing the output process signals are transmitted to the input / output modules and the state-of-health status of the input / output modules is polled. Based on the results of the polling, modules IMN₁ 20₁, IMN₂ 20₂ generate generalized discrete state-of-health signals of the IOS station through the contacts of signal relays.

Modules of communication with the process MCP *15*₁ - *15*ₖ execute reception and reproduction of analog and binary signals of the process, conversion of input signals of the process into digital form and digital values of output signals into analog form, preprocessing of input signals, communication with SF AC controllers via communication lines *17*, *18*₁ of SF IOB bus *9*, and communications with normal operation controllers AC via redundant bus NO IOB₁, NO IOB₂, and further via redundant bus ENL (ENL₁, ENL₂) *10*₁, *10₂.*

Figure 4 shows the structure of MCP module of analog signal input.

Process signal input and processing functions according to safety algorithms are implemented by safety feature processor SF CPU *21*.

Process signal input and processing functions according to normal operation algorithms are implemented by individual normal operation processor *22* meeting diversity requirements relative to safety feature processor SF CPU *21*.

Process signal comes in analog signal input module MCP via input circuits 22ₐ to the input of analog-to-digital converter ADC *22*_{b} that converts the signal into digital form. Processor SF CPU *21* receives digital signal from ADC *22*_{b} output, executes its preprocessing according to safety algorithm, and transmits it, respectively, via communication line *17* of SF IOB bus to communication module CIC of IOS station.

Normal operation processor *22* implements processing of digital signal received from ADC *22*_{b} output according to normal operation algorithm, and transmits the result of processing via redundant intra-station bus NO IOB₁ *19*₁, NO IOB₂ *19*₂ to redundant interface modules IMN₁ *20*₁, IMN₂ 20₂ for further transmission via redundant bus ENL₁ *10*₁, *ENL*₂ *10₂* (Figure 3) to normal operation controller AC.

Binary signal input modules and analog and binary signal output modules operate according to similar scheme.

Figure 5 shows the structure of a priority control station PCS using the example of PCS station of channel 1 being part of a group of 4 stations PCS_{1 - 4}, with which automation controller SF AC of each channel implements data exchange via one communication line of SF IOB bus. IOS station contains: communication module VCM *25*, voting communication module VM *24*, priority control modules PCM *23*₁ - *23*ₑ. VM module is connected: via individual communication lines *28* of SF IOB *9* of 'point-to-point' type of serial duplex interface with each PCM module *23*₁ - *23*ₑ; via 3 communication lines *27* of SF IOB bus *9* with communication modules VCM *25* of the other 3 stations PCS.

Voting communication module VM *24* implements functions of branching downstream commands and data from SF AC to PCM modules 23₁ - *23*ₑ and concentrating upstream data from PCM modules *23*₁ - *23*ₑ to SF AC, and functions of hardware-based majority selection of downstream commands and data from 4 safety channels received via communication lines *29*, *27* of SF IOB *9* according to majority processing algorithm '2 out of 4' for transmission to PCM modules *23*₁ - *23*ₑ.

Communication module VCM *25* is linked: via line *29* of SF IOB with VM communication module *24* of its PCS station; via 3 communication lines *27* of SF IOB - with VM communication modules of the other 3 stations of safety channel 1; via communication line *26* of SF IOB bus *9* in PCS₁ station - with SF AC of its own safety channel 1 and in the other 3 PCS stations - with SF AC of the other 3 safety channels.

Figure 6 shows structure of links via SF IOB bus of a group of 4 stations PCS_{1 - 4} of safety channel 1 (4-channel safety system) with SF AC controller of this safety channel and with SF AC controllers of the other 3 safety channels.

Communications of PCM modules 23_{1 -} *23*ₑ with the normal operation system (Figure 5) is implemented using redundant interface modules IMN₁ *20*₁, IMN₂ *20*₂, redundant bus NO IOB₁ *19*₁, NO IOB₂ , via which modules IMN₁, IMN₂ send commands to the PCM modules for generating the AM actuator control signals and reading the AM status received from the AC controller, and poll the "good / bad" status of the PCM modules. Based on the results of the polling, modules IMN₁ *20*₁*,* IMN₂ 20₂ generate generalized discrete state-of-health signals of the IOS station through the contacts of signal relays.

Figure 7 shows arrangement of safety feature hardware, normal operation hardware and communication with AM control centers in PCM modules using block diagram of PCM module.

PCM module executes AM control following initiating commands from several control centers: from SF AC controller via communication lines *28* of SF IOB bus; from normal operation controller AC via redundant buses ENL₁ *10*₁, ENL₂ *10*₂ and NO IOB₁ *19*₁, NO IOB₂ *19*₂ (Figures 5 and 7); from MCR via wire lines *13*₁ and from ECR via wire lines *13*₂. Via said links, transmission of PCM and AM state is executed, respectively, to SF AC, AC, MCR and ECR.

Generation of AM control commands is implemented: when initiated by commands from SF AC, MCR and ECR - in safety feature programmable logic circuits SF PLC *30*, and when initiated by commands from AC, MCR and ECR - in normal operation processor CPU *31.*

AM control commands from SF PLC 30, CPU processor *31* come to PLC of priority control logic PCL PLC *32*, where a command to be sent to AM is generated.

Normal operation processor CPU *31* executes based on commands from normal operation automation controller AC and together with it the functions of automatic control of actuation mechanisms in the normal operation system if there is no emergency situation, and functions of controlling the commands sent to AM from SF AC, receiving data of state of AM controlled from SF AC, and transmitting this data to AC normal operation controller via NO IOB and ENL buses for evaluation by it of NPP and safety channel state.

Via feedback link *34* from PCL PLC output, line *28* of SF IOB bus, and redundant bus NO IOB₁ *19*₁, NO IOB₂ *19*₂ the controllers, respectively, SF AC and AC interrogate the state of commands sent to AM. And here AC controller inquires for the state of its commands sent to AM, and of commands sent to AM by SF AC controller.

Via input line *33* the AM state signals come to MCR, ECR, and via PCL PLC *32*, SF PLC *30* and CPU processor *31* - to automation controllers, respectively, SF AC and AC. Here AC controller receives the AM state signals both when sending to AM its own commands, and when the commands are sent to AM by SF AC controller.

Figure 8 shows structure of SF AC automation controller using the example of channel 1 of 4-channel safety system and scheme of communications of this controller and SF AC controllers of other safety channels with the IOS and PCS stations. In order to optimize the communications of SF AC with the IOS and PCS stations, they are combined into groups of 4 stations of the same name per group in accordance with the placement of these stations made in the form of standard crates, in instrument cabinets, 4 stations per cabinet. Automation controllers SF AC of 4 safety channels are located in 4 separate cabinets.

Automation controller SF AC is comprised of automation processor module SF APM 35 and 11 communication modules - branch modules BM-4 36₁₋₁₁, each having 4 branches. Three first modules BM-4 36₁₋₃ provide connection to the SF AC controller of up to 3 groups of IOB stations in each safety channel, or of up to 12 IOB stations. Eight next modules BM-4 ₄₋₁₁ in each safety channel provide connection to the SF AC controller of up to 32 groups of PCS stations or of up to 128 PCS stations. Each BM-4 module provides connection of up to 4 groups of PCS stations.

Automation processor module SF APM 35 of controller SF AC receives via bus SF IOB 9 digital values of process parameters from MCP modules of IOB₁₋ₙ stations of its safety channel, processes them and, when an emergency is detected, in accordance with safety algorithms, generates and outputs via bus SF IOB 9 into PCM modules of PCS _{1 - m} stations of its own and other safety channels commands for controlling the protective actions to be selected for execution by the VM voting communication modules according to the voting principle '2 out of 4', Figure 6, 8. In the process of executing safety algorithms, the SF APM 35 module exchanges data with the SF APM modules of the 2nd, 3rd and 4th safety channels, respectively, via the IPI 8₁₂, 8₁₃, 8₁₄ interprocessor interfaces and performs majority processing of data received from the IOS stations of all safety channels according to the '2 of 4' rule. Via the communication interfaces of the SF APM module of the 1st safety channel with the MCR - IPI₁ 14₁₁ and with ECR - IPI₂ 14₂₁, the processor module receives remote control commands from the MCR and ECR and transmits to the the MCR and ECR diagnostic information about execution of protection algorithms and status of priority control equipment and actuation mechanisms. Via redundant bus EN 5₁, 5₂, the SF APM module transmits the diagnostic information of the safety system to the normal operation system.

As shown in Figure 8, the SF AC controller setup for communications with IOS, PCS stations in a four-channel control safety system, the processor module APM executes reception of data from IOS stations and transmission of commands and data to PCS stations: via lines of bus SF IOB 37₁ - 37₁₁ communication, respectively, with communication modules BM-4 36₁ - 36₁₁, and further via 4 communication lines 18₁ - 18_{4 3} of 3 modules BM-4 ₁₋₃ with IOB stations ₁₋₄ of 3 groups or with 12 IOB stations and via 4 sets of communication lines 26₁₁ - 26₁₄, 26₂₁ - 26₂₄, 26₃₁ - 26₃₄, 26₄₁ - 26₄₄ of 8 modules BM-4 ₄₋₁₁ of all safety channels with 32 groups of CSS ₁₋₄ stations or with 128 PCS stations.

Layout of CSS stations by 4 stations per cabinet in accordance with the number of safety channels ensures optimization of a large number of channel and inter-channel communications via the input / output bus SF IOB between the SF AC controllers and the PCS stations in connection with the fundamental decision to architect the bus based on 'point-to-point' interfaces with full-duplex command and data transmission mode and locate VM voting communication modules in the lower end nodes of the bus.

Optimization consists in reducing the cable connections between the SF AC cabinets of four channels and each of the 32 PCS cabinets to 4 minimum required, and in implementing inter-channel communications for voting in each of a cabinet's 4 PCS stations according to the '2 out of 4' principle by means of communication modules VCM , VM and additional 'point-to-point' type cable connections inside the cabinets according to the scheme, Fig. 6, which are shorter and better protected than the cable connections between the cabinets.

## Claims

1. Control safety system for use in nuclear plants, comprising:
a plurality of identical safety channels, each said channel includes process signal input/output stations IOS₁₋ₙ (1), actuation mechanism priority control stations PCS₁₋ₘ (3) that are connected with the main control room MCR and emergency control room ECR, safety features automation controller SF AC (2), safety features input/output bus SF IOB (9) for SF AC controller data exchange with the IOS₁₋ₙ stations (1) and PCS₁₋ₘ (3) stations, and is cross-connected with other safety channels by means of duplex optical fiber communication paths, **characterized in that the** said IOS₁₋ₙ stations (1) contains modules of communication with the process and communication module MCP₁₋ₖ (15) - converter of communication interfaces CIC (16) of SF IOB bus (9); said PCS₁₋ₘ station (3) contains actuation mechanism priority control modules PCM₁₋ₑ (23) and communication modules: voting communication module VCM (25) and voting module VM (24) of SF IOB bus (9); said SF AC (2) contains safety feature automation processor module SF APM (35) and communication modules - branching modules BM-4₁₋ₚ (36) of SF IOB bus (9); automation controllers SF AC (2) of all safety channels are connected to the normal operation system via redundant bus EN (5) built based on switched Ethernet interface, ring structure of net switches connection and data-level communication protocol; each safety channel contains additionally normal operation automation controllers AC_{1 - s} (4) that are connected with IOS_{1 - n} stations (1), PCS_{1 - m} stations (3) via redundant buses ENL of normal operation (10) built based on switched Ethernet interface, radial structure of net switch connection and data-level communication protocol, and with the normal operation system via redundant bus EN (5) of normal operation; normal operation automation controllers AC (4), integrated into IOS₁₋ₙ stations (1) and PCS₁₋ₘ stations (3) means of AC communication with MCP_{1 - k} module (15) and PCM (23) modules, and integrated into MCP_{1 - k} module (15) and PCM (23) modules normal operation software & hardware are built based on different hardware & software platforms; IOS₁₋ₙ stations (1) and PCS₁₋ₘ stations (3), automation controller SF AC (2), and power supply and communication equipment of the safety system include built-in self-testing and self-monitoring features that generate at the outputs the binary signals of the respective equipment state 'operative/inoperative' coming to NO AC, where the signals are processed and transmitted to the upper level of the normal operation system control via EN bus (5)wherein the communication module CIC (16) of SF IOB bus (9) in IOS₁₋ₙ stations (1) is connected via separate SF IOB communication lines with automation controller SF AC (2) of the safety channel and with each MCP_{1 - k} module (15) of this station.

2. Control safety system for use in nuclear power plants according to claim 1, **characterized in that** each IOS₁₋ₙ station (1) includes two redundant interface modules IMN (20) of normal operation connected to normal operation automation controller NO AC (4) via redundant bus ENL (10); each MCP_{1 - k} module (15) includes integrated individual normal operation processor connected with each of the 2 modules IMN (20) via separate line of a serial duplex 'point-to-point'-type interface of normal operation bus NO IOB (19).

3. Control safety system for use in nuclear power plant according to claim 1, **characterized in that** the PCS₁₋ₘ stations (3) in each safety channel are combined into groups of N stations, a number of PCS stations (3) is determined by a number of safety channels, the first PCS₁ station (3) of the group is connected via SF IOB communication line with automation controller SF AC (2) of its safety channel, the other PCS_{2 - N} stations (3) of the group are connected with automation controllers SF AC (2) of the other 2-N safety channels; communication module VCM (25) of each PCS₁₋ₘ station (3) is connected with communication module of voting according to `2 out of N' majority algorithm VM (24) of its own PCS₁₋ₘ station (3) and with communication modules VM (24) of the other PCS₁₋ₘ stations (3) of the group; communication module VM (24) of each PCS₁₋ₘ station (3) is connected via SF IOB communication lines with priority control modules PCM₁₋ₑ (23).

4. Control safety system for use in nuclear power plant according to claim 3, **characterized in that** each PCS₁₋ₘ station (3) contains two redundant interface modules IMN (20) of normal operation connected to normal operation automation controller NO AC (4) via redundant bus ENL (10); each PCM_{1 - e} module (23) includes integrated individual normal operation processor connected with each of the 2 modules IMN (20) via separate line of a serial duplex 'point-to-point'-type interface of normal operation bus NO IOB (19).

## Patentansprüche

1. Sicherheitssteuerungssystem zur Verwendung in Kernkraftwerken, umfassend:
eine Vielzahl von identischen Sicherheitskanälen, wobei jeder Kanal Eingangs-Ausgangsstationen von Prozesssignalen EAS₁₋ₙ (1), Prioritätssteuerungsstationen von Aktoren PSS₁₋ₘ (3), die mit der Hauptsteuerzentrale HSZ und der Ersatzsteuerzentrale ESZ verbunden sind, die Sicherheitsautomatisierungssteuerung SAS (2), einen Sicherheits-Eingangs-Ausgangsbus SEAB (9) zum Datenaustausch der SAS mit den Stationen EAS₁₋ₙ (1) und PSS₁₋ₘ (3) und mit anderen Sicherheitskanälen über Duplex-Lichtwellenleiterverbindungen querverbunden ist, **dadurch gekennzeichnet, dass** die Station EASi-n (1) Module zur Kommunikation mit dem Prozess und ein Kommunikationsmodul MSP₁₋ₖ (15) - einen Kommunikationsschnittstellenkonverter KSK (16) des Busses SEAB (9) enthält; die Station PSS₁₋ₘ (3) Prioritätssteuerungsmodule der Aktoren PSM₁₋ₑ (23) und Kommunikationsmodulen enthält: ein Votierungskommunikationsmodul VKM (25) und ein Votierungsmodul VM (24) des Busses SEAB (9); SAS (2) ein Sicherheitsautomatisierungsprozessormodul SAPM (35) und Kommunikationsmodule - Verzweigungsmodule VM₁₋ₚ (36) des Busses SEAB (9) enthält; Automatisierungssteuerungen SAS (2) aller Sicherheitskanäle über den auf der Basis einer geschalteten Ethernet-Schnittstelle, der Ringstruktur der Netzwerk-Switch-Verbindung und des Kommunikationsprotokolls der Datenebene aufgebauten redundanten Bus EN (5) mit dem Normalbetriebssystem verbunden sind; jeder Sicherheitskanal zusätzlich Normalbetrieb-Automatisierungssteuerungen AS₁₋ₛ (4) enthält, die über die auf der Basis einer geschalteten Ethernet-Schnittstelle, der Ringstruktur der Netzwerk-Switch-Verbindung und des Kommunikationsprotokolls der Datenebene aufgebauten redundanten Normalbetrieb-Busse ENL (10) mit den Stationen EASi-n (1), PSS₁₋ₘ (3) und über den redundanten Normalbetrieb-Bus EN (5) mit dem Normalbetriebssystem verbunden sind; die Normalbetrieb-Automatisierungssteuerungen AS (4), die in die Stationen EAS₁₋ₙ (1) und PSS₁₋ₘ (3) eingebaute Kommunikationsmittel AS mit dem Modul MSP₁₋ₖ (15) und den Modulen PSM (23) sowie die in das Modul MSP₁₋ₖ (15) und die Module PSM (23) eingebaute Normalbetrieb-Software und -Hardware auf der Grundlage unterschiedlicher Hardware- und Softwareplattformen aufgebaut sind; die Stationen EAS₁₋ₙ (1), PSS₁₋ₘ (3), die Automatisierungssteuerung SAS (2) und die Stromversorgungs- und Kommunikationseinrichtungen des Sicherheitssystems eingebaute Selbsttest- und Selbstüberwachungswerkzeuge enthalten, die an den Ausgängen binäre Signale des Zustands der entsprechenden Einrichtungen "fehlerfrei/fehlerhaft" erzeugen, die am NB AS ankommen, wo die Signale verarbeitet und über den Bus EN (5) an die obere Steuerungsebene des Normalbetriebssystems übertragen werden, wobei in den Stationen EAS₁₋ₙ (1) das Kommunikationsmodul PIK (16) des Busses SEAB (9) über separate Kommunikationsleitungen des SEAB mit der Automatisierungssteuerung SAS (2) des Sicherheitskanals und jedem Modul MSP₁₋ₖ (15) dieser Station verbunden ist.

2. Sicherheitssteuerungssystem zur Verwendung in Kernkraftwerken nach Anspruch 1, **dadurch gekennzeichnet, dass** jede Station EASi-n (1) zwei redundante Normalbetrieb-Schnittstellenmodule NSM (20) umfasst, die über einen redundanten Bus ENL (10) mit der Normalbetrieb-Automatisierungssteuerung NB AS (4) verbunden sind; jedes Modul MSP₁₋ₖ (15) einen integrierten separaten Normalbetriebsprozessor umfasst, der über eine separate Punkt-zu-Punkt-Seriell-Duplex-Schnittstellenleitung des Normalbetrieb-Busses NB EAB (19) mit jedem der 2 Normalbetrieb-Module NSM (20) verbunden ist.

3. Sicherheitssteuerungssystem zur Verwendung in Kernkraftwerken nach Anspruch 1, **dadurch gekennzeichnet, dass** die Stationen PSS₁₋ₘ (3) in jedem Sicherheitskanal zu Gruppen von N Stationen zusammengefasst sind; die Anzahl der Stationen PSS (3) durch die Anzahl der Sicherheitskanäle bestimmt ist; die erste Station PSS1 (3) der Gruppe über die Kommunikationsleitung SEAB mit der Automatisierungssteuerung SAS (2) ihres Sicherheitskanals verbunden ist; die anderen Stationen PSS_{2-N} (3) der Gruppe mit den Automatisierungssteuerungen SAS (2) anderer Sicherheitskanäle 2-N verbunden sind; das Kommunikationsmodul VKM (25) jeder Station PSS₁₋ₘ (3) mit dem Votierungskommunikationsmodul durch den Mehrheitsalgorithmus "2 aus N" des VM (24) seiner Station PSS₁₋ₘ (3) und den Kommunikationsmodulen VG (24) anderer Stationen PSS₁₋ₘ (3) der Gruppe verbunden ist; das Kommunikationsmodul VM (24) jeder Station PSS₁₋ₘ (3) über die Kommunikationsleitungen SEAB mit den Prioritätssteuerungsmodulen PSM₁₋ₑ (23) verbunden ist.

4. Sicherheitssteuerungssystem zur Verwendung in Kernkraftwerken nach Anspruch 3, **dadurch gekennzeichnet, dass** jede Station PSS₁₋ₘ (3) zwei redundante Normalbetrieb-Schnittstellenmodule NSM (20) umfasst, die über den redundanten Bus ENL (10) mit der Normalbetriebs-Automatisierungssteuerung NB AS (4) verbunden sind; jedes Modul PSM₁₋ₑ (23) einen integrierten separaten Normalbetriebsprozessor umfasst, der über eine separate Punkt-zu-Punkt-Seriell-Duplex-Schnittstellenleitung des Normalbetrieb-Busses NB EAB (19) mit jedem der 2 Normalbetrieb-Module NSM (20) verbunden ist.

## Revendications

1. Système de commande de la sécurité pour être utilisé aux centrales électronucléaires qui contient :
plusieurs canaux de sécurité identiques, chaque canal inclut les stations d'entrée-sortie des signaux du processus technologique IOS₁₋ₙ (1), les stations de commande prioritaire des mécanismes d'exécution PCS₁₋ₘ (3) qui sont reliées au point de commande en blocs MCR et au point de commande de réserve ECR, un contrôleur de l'automatisation des dispositifs de sécurité SF AC (2), un bus d'entrée-sortie des dispositifs de sécurité SF IOB (9) pour l'échange en données du contrôleur SF AC avec les stations IOS₁₋ₙ (1) et PCS₁₋ₘ (3), et est relié de façon croisée à d'autres canaux de sécurité à l'aide des liaisons à fibres optiques duplex, **qui se distingue par ce que** les stations IOS₁₋ₙ (1) contiennent les modules de liaison avec le processus technologique et un module de communication MCP₁₋ₖ (15) - transformateur des interfaces des communications CIC (16) du bus SF IOB (9); la station PCS₁₋ₘ (3) contient les modules de commande prioritaire des mécanismes d'exécution PCM₁₋ₑ (23) et les modules de communication : un module de la communication de votation VCM (25) et un module de la votation VM (24) du bus SF IOB (9) ; le SF AC (2) contient un module de processeur de l'automatisation des dispositifs de sécurité SF APM (35) et les modules de communication - modules de dérivation BM-4₁₋ₚ (36) du bus SF IOB (9) ; les contrôleurs de l'automatisation SF AC (2) de tous les canaux de sécurité sont branchés au système de l'exploitation normale par un bus réservé EN (5) construit à base de l'interface commutée d'Ethernet, de la structure en anneau de reliage des commutateurs de réseau et du protocole de communication du niveau de données ; chaque canal de sécurité contient en supplément les contrôleurs de l'automatisation de l'exploitation normale AC₁₋ₛ (4) qui sont reliés aux stations IOS₁₋ₙ (1), aux stations PCS₁₋ₘ (3) par les bus réservés ENL de l'exploitation normale (10) construits à base de l'interface commutée d'Ethernet, de la structure en étoile de reliage des commutateurs de réseau et du protocole de communication du niveau de données et au système de l'exploitation normale par un bus réservé de l'exploitation normale EN (5) ; les contrôleurs de l'automatisation de l'exploitation normale AC (4), les moyens de communication du AC avec le module MCP₁₋ₖ (15) et avec les modules PCM (23) encastrés aux stations IOS₁₋ₙ (1) et PCS₁₋ₘ (3) et les magiciels de l'exploitation normale encastrés au module MCP₁₋ₖ (15) et aux modules PCM (23) sont construits à base de différentes plateformes de matériel et de logiciel ; les stations IOS₁₋ₙ (1), PCS₁₋ₘ (3), le contrôleur de l'automatisation SF AC (2) et l'appareillage d'alimentation et de communication du système de sécurité contiennent les moyens de l'autotest et de l'autocontrôle encastrés qui aux sorties forment les signaux binaires de l'état de l'appareillage correspondant « en bon état/en panne » qui arrivent au NO AC où les signaux sont traités et transmis vers le niveau de commande supérieur du système de l'exploitation normale par le bus EN (5), en cela dans les stations IOS₁₋ₙ (1) le module de communication CIC (16) du bus SF IOB (9) est relié par les lignes de liaison séparées du SF IOB au contrôleur de l'automatisation SF AC (2) du canal de sécurité et à chaque module MCP₁₋ₖ (15) de cette station.

2. Système de commande de la sécurité pour être utilisé aux centrales électronucléaires selon le point 1 **qui se distingue par ce que** chaque station IOS₁₋ₙ (1) contient deux modules d'interface réservés IMN (20) de l'exploitation normale branchés au contrôleur de l'automatisation de l'exploitation normale NO AC (4) par un bus réservé ENL (10) ; chaque module MCP₁₋ₖ (15) contient un processeur intégré séparé de l'exploitation normale relié à chacun de deux modules IMN (20) par une ligne séparée de l'interface sérielle duplex type « point-point » du bus de l'exploitation normale NO IOB (19).

3. Système de commande de la sécurité pour être utilisé aux centrales électronucléaires selon le point 1 **qui se distingue par ce que** les stations PCS₁₋ₘ (3) dans chaque canal de sécurité sont réunies en groupes de N stations ; le nombre de stations PCS (3) est déterminé par le nombre de canaux de sécurité ; la première station PCS₁ (3) du groupe est reliée par une ligne de liaison SF IOB au contrôleur de l'automatisation SF AC (2) de son canal de sécurité ; les autres stations PCS₁₋ₘ (3) du groupe sont reliées aux contrôleurs de l'automatisation SF AC (2) des autres canaux de sécurité 2-N ; le module de communication VCM (25) de chaque station PCS₁₋ₘ (3) est relié au module de communication de la votation selon l'algorithme majoritaire «2 de N» VM (24) de sa station PCS₁₋ₘ (3) et par les modules de communication VM (24) des autres stations PCS₁₋ₘ (3) du groupe ; le module de communication VM (24) de chaque station PCS₁₋ₘ (3) est relié par les lignes de liaison du SF IOB aux modules de commande prioritaire PCM₁₋ₑ (23).

4. Système de commande de la sécurité pour être utilisé aux centrales électronucléaires selon le point 3 **qui se distingue par ce que** chaque station PCS₁₋ₘ (3) contient deux modules d'interface réservés IMN (20) de l'exploitation normale branchés au contrôleur de l'automatisation de l'exploitation normale NO AC (4) par un bus réservé ENL (10) ; chaque module PCM₁₋ₑ (23) contient un processeur intégré séparé de l'exploitation normale branché à chacun de 2 modules IMN (20) par une ligne séparée de l'interface sérielle duplex type « point-point » du bus de l'exploitation normale NO IOB (19).
